# FASCICULE DE BREVET EUROPEEN

(11) **EP 2 980 942 B1**
(45) Date de publication et mention de la délivrance du brevet: **05.06.2019**
(21) Numéro de dépôt: 15175945.3
(22) Date de dépôt: 08.07.2015
(51) Int. Cl.: H02H 5/12, H02H 7/06, H02J 4/00, B60L 3/00, B60L 11/18, B63J 3/04

(54) **SYSTÈME DE MISE EN SÉCURITÉ POUR LE RACCORDEMENT ÉLECTRIQUE D'UN ÉQUIPEMENT ÉLECTRIQUE À UN APPAREIL D'ALIMENTATION ÉLECTRIQUE, ET INSTALLATION ÉLECTRIQUE COMPRENANT UN TEL SYSTÈME**
SICHERUNGSSYSTEM FÜR DEN ELEKTRISCHEN ANSCHLUSS EINES ELEKTROGERÄTS AN EIN GERÄT MIT STROMANSCHLUSS, UND ELEKTRISCHE ANLAGE, DIE EIN SOLCHES SYSTEM UMFASST
SAFETY SYSTEM FOR THE ELECTRICAL CONNECTION OF ELECTRICAL EQUIPMENT TO A POWER SUPPLY APPARATUS, AND ELECTRICAL INSTALLATION COMPRISING SUCH A SYSTEM

(30) Priorité: 01.08.2014 FR 1457517
(43) Date de publication de la demande: 03.02.2016
(73) Titulaire: Schneider Electric Industries SAS, 92500 Rueil-Malmaison (FR)
(72) Inventeur: MEGDICHE, Malik, 38050 GRENOBLE Cedex 09 (FR); RADU, Daniel, 38050 GRENOBLE Cedex 09 (FR); CISSOKO, Seyba, 38050 GRENOBLE Cedex 09 (FR); FERTON, Jean-Marc, 38050 GRENOBLE Cedex 09 (FR); RENARD, Philippe, 38050 GRENOBLE Cedex 09 (FR)
(74) Mandataire: Lavoix

(56) Documents cités:
- CN-A- 102 130 455
- US-A- 5 202 617
- US-A- 5 245 219
- US-A- 5 536 173
- US-A1- 2014 094 046
- Tony R. Kuphaldt: "Lessons in electric circuits Volume I - DC", , 18 October 2006 (2006-10-18), pages 93-96, Retrieved from the Internet: URL:http://citenpl.internal.epo.org/wf/web /citenpl/citenpl.html?_url=https%3A//www.i biblio.org/kuphaldt/electricCircuits/DC/DC .pdf [retrieved on 2018-03-13]

## Description

La présente invention concerne un système de mise en sécurité pour le raccordement électrique d'un équipement électrique à un appareil d'alimentation électrique.

L'appareil d'alimentation comprend des premiers conducteurs électriques destinés à être reliés à une source d'alimentation, telle qu'un réseau électrique, un premier organe de connexion électrique, un premier dispositif de coupure et un premier dispositif de mise à la terre, le premier organe de connexion étant relié aux premiers conducteurs, le premier dispositif de coupure étant mobile entre une position fermée de circulation d'un premier courant dans les premiers conducteurs et une position ouverte d'absence de circulation dudit premier courant, et le premier dispositif de mise à la terre étant mobile entre une position fermée de mise à la terre des premiers conducteurs et une position ouverte d'absence de mise à la terre.

L'équipement électrique comprend des deuxièmes conducteurs électriques, un deuxième organe de connexion électrique, un deuxième dispositif de coupure et un deuxième dispositif de mise à la terre, le deuxième organe de connexion étant relié aux deuxièmes conducteurs, le deuxième dispositif de coupure étant mobile entre une position fermée de circulation d'un deuxième courant dans les deuxièmes conducteurs et une position ouverte d'absence de circulation dudit deuxième courant, et le deuxième dispositif de mise à la terre étant mobile entre une position fermée de mise à la terre des deuxièmes conducteurs et une position ouverte d'absence de mise à la terre.

Le deuxième organe de connexion est apte à être couplé au premier organe de connexion pour relier électriquement les deuxièmes conducteurs aux premiers conducteurs.

L'invention concerne également une installation électrique comprenant un tel appareil d'alimentation et un tel système de mise en sécurité.

L'invention concerne le domaine de la consignation d'organes de connexion électrique destinés à être reliés électriquement entre eux pour connecter des conducteurs électriques à d'autres conducteurs électriques, cette consignation étant nécessaire pour assurer la sécurité des personnes, lors des phases de connexion et de déconnexion desdits organes de connexion électrique.

Les premiers et deuxième conducteurs électriques sont par exemple des conducteurs moyenne tension, c'est-à-dire des conducteurs aptes à présenter une tension supérieure ou égale à 1000 V en courant alternatif et à 1500 V en courant continu. La connexion et la déconnexion des premiers et deuxième organes de connexion présente alors un risque pour la sécurité des personnes si une tension est toujours présente sur certains des conducteurs parmi les premier et deuxième conducteurs électriques.

L'équipement électrique est par exemple le réseau électrique à bord d'un navire qui est stationné à quai, le réseau du navire permettant d'alimenter différentes charges électriques à bord du navire. La source d'alimentation à laquelle est connecté l'appareil d'alimentation est par exemple le réseau terrestre, apte à délivrer une tension électrique. Lorsque le réseau terrestre délivre une tension différente de la tension de l'équipement électrique, un transformateur permet d'adapter la tension entre le réseau terrestre et l'équipement électrique.

Pour le raccordement électrique des navires à quai, une ou plusieurs prises mobiles moyenne tension sont connectées/déconnectées d'embases respectives avec des fréquences d'utilisation élevées, jusqu'à plusieurs fois par jour, chaque prise formant un organe de connexion et chaque embase respective formant l'autre organe de connexion. Ces connexions/déconnexions sont effectuées manuellement, ce qui engendre un risque élevé pour la sécurité du personnel : risque de défaillance de la mise à la terre ou tension accidentelle sur les conducteurs électriques, surtensions, etc...

Pour éviter de tels risques, des procédures de consignation manuelle sont alors effectuées à chaque connexion/déconnexion.

Toutefois, chaque procédure de consignation manuelle est particulièrement longue avec un temps de mise en oeuvre généralement supérieur à 30 minutes, et pouvant aller jusqu'à 1h30, ce qui est parfois incompatible ou difficilement compatible avec les contraintes des navires et/ou des ports. En effet, pour les ferries par exemple, un temps de consignation d'une heure n'est pas satisfaisant lorsqu'une escale dure seulement 2 heures.

Dans certains cas, les opérations de connexion/déconnexion doivent être effectuées par une seule personne à bord, ce qui n'est pas compatible avec les opérations de consignation manuelle qui nécessitent une personne à quai.

Le but de l'invention est donc de proposer un système de mise en sécurité permettant de réduire le temps nécessaire à la consignation lors de la connexion ou de la déconnexion du deuxième organe de connexion avec le premier organe de connexion.

À cet effet, l'invention a pour objet un système de mise en sécurité selon la revendication 1.

Suivant d'autres aspects avantageux de l'invention, le système de mise en sécurité est selon les revendications 2 à 12.

L'invention a également pour objet une installation électrique selon la revendication 13.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un navire stationné à quai, le navire comportant un réseau de bord formant équipement électrique et destiné à être alimenté via une installation électrique selon un premier mode de réalisation, l'installation comportant un appareil d'alimentation relié au réseau électrique terrestre et un système de mise en sécurité pour le raccordement électrique du réseau de bord à l'appareil d'alimentation,
- la figure 2 est un schéma électrique de l'installation électrique de la figure 1,
- la figure 3 est une vue analogue à celle de la figure 1 avec une installation électrique selon un deuxième mode de réalisation de l'invention, et
- la figure 4 est une vue analogue à celle de la figure 2 selon le deuxième mode de réalisation de l'invention.

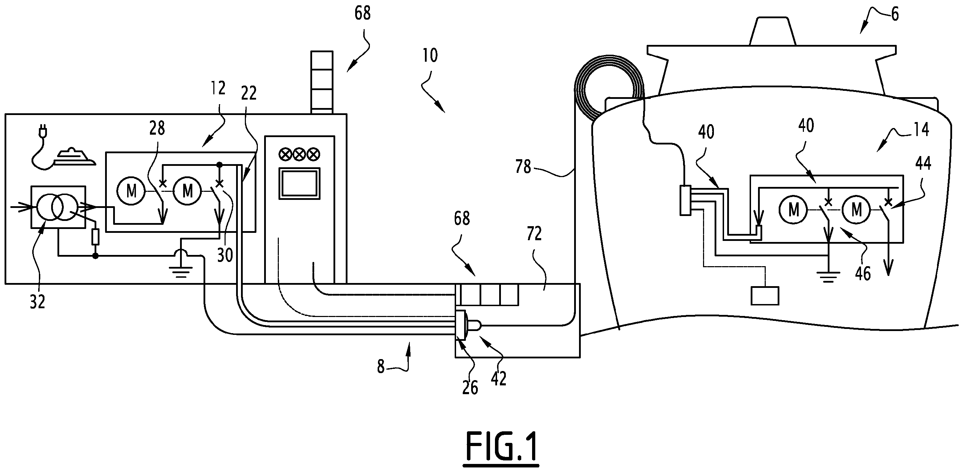

Sur la figure 1, un navire 6 est stationné contre un quai 8, et une installation électrique 10 est disposée en en partie sur le quai 8 et en partie sur le navire 6.

L'installation électrique 10 comprend un appareil 12 d'alimentation d'un équipement électrique 14 et un système de mise en sécurité 20 pour le raccordement électrique de l'équipement électrique 14 à l'appareil d'alimentation 12.

L'installation électrique 10 est adaptée pour alimenter l'équipement électrique 14, tel qu'un réseau électrique à bord du navire 6, également appelé réseau bord 14 dans la suite de la description.

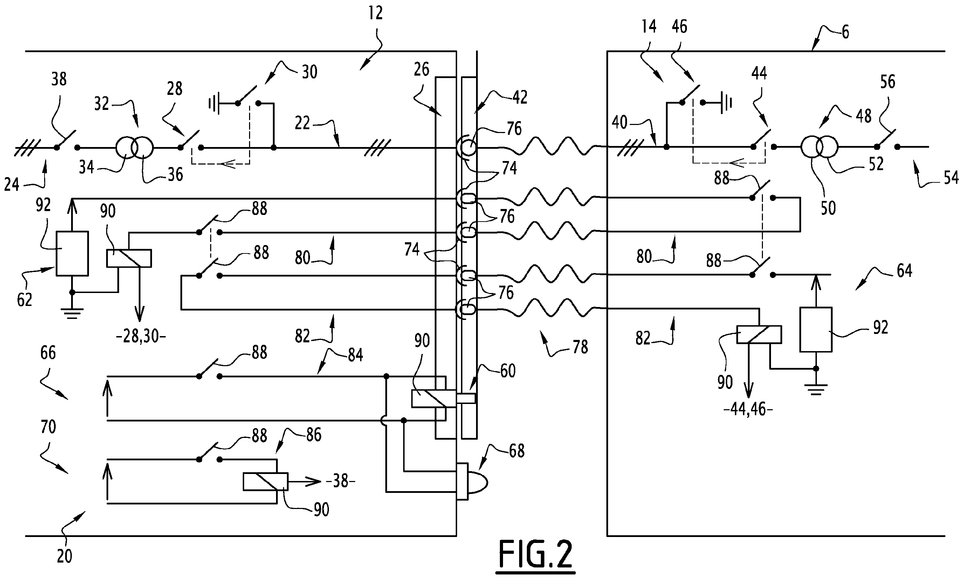

Sur les figures 1 et 2, l'appareil d'alimentation 12 comprend des premiers conducteurs électriques 22 destinés à être reliés à une source d'alimentation 24, telle qu'un réseau électrique, en particulier le réseau électrique terrestre.

L'appareil d'alimentation 12 comprend également un premier organe de connexion électrique 26, un premier dispositif de coupure 28 et un premier dispositif 30 de mise à la terre. Le premier organe de connexion 26 est relié aux premiers conducteurs 22. Le premier dispositif de coupure 28 est mobile entre une position fermée pour la circulation d'un premier courant dans les premiers conducteurs 22 et une position ouverte pour l'absence de circulation dudit premier courant. Le premier dispositif de mise à la terre 30 est mobile entre une position fermée pour la mise à la terre des premiers conducteurs 22 et une position ouverte pour l'absence de mise à la terre desdits premiers conducteurs 22.

En complément facultatif, notamment lorsque la source d'alimentation 24 est une source haute tension, l'appareil d'alimentation 12 comprend en outre un premier transformateur électrique 32 pour convertir la haute tension issue de la source d'alimentation 24 en une moyenne tension délivrée aux premiers conducteurs 22, le premier transformateur électrique 32 comportant un premier enroulement primaire 34 relié à la source d'alimentation 24 et un premier enroulement secondaire 36 relié au premier conducteur 22 et au premier dispositif de coupure 28.

Selon ce complément facultatif, l'appareil d'alimentation 12 comprend en outre un premier dispositif additionnel de coupure 38 relié au premier enroulement primaire 34, le premier dispositif additionnel de coupure 38 étant mobile entre une position fermée pour la circulation d'un courant à travers le premier enroulement primaire 32 et une position ouverte pour l'absence de circulation dudit courant.

L'équipement électrique 14 comprend des deuxièmes conducteurs électriques 40, un deuxième organe de connexion électrique 42, un deuxième dispositif de coupure 44 et un deuxième dispositif 46 de mise à la terre. Le deuxième organe de connexion 42 est relié aux deuxièmes conducteurs 40, et est apte à être couplé au premier organe de connexion 26 pour relier électriquement les deuxièmes conducteurs 40 aux premiers conducteurs 22. Le deuxième dispositif de coupure 44 est mobile entre une position fermée pour la circulation d'un deuxième courant dans les deuxièmes conducteurs 40 et une position ouverte pour l'absence de circulation dudit deuxième courant. Le deuxième dispositif de mise à la terre 46 est mobile entre une position fermée pour la mise à la terre des deuxièmes conducteurs 40 et une position ouverte pour l'absence de mise à la terre desdits deuxièmes conducteurs 40.

En complément facultatif, l'équipement électrique 14 comprend en outre un deuxième transformateur électrique 48 comportant un deuxième enroulement primaire 50 relié aux deuxièmes conducteurs électriques 40 et un deuxième enroulement secondaire 52 relié à une charge électrique 54.

Selon ce complément facultatif, l'équipement électrique 14 comprend en outre un deuxième dispositif additionnel de coupure 56 relié au deuxième enroulement secondaire 52, le deuxième dispositif additionnel de coupure 56 étant mobile entre une position fermée pour la circulation d'un courant à travers le deuxième enroulement secondaire 52 et une position ouverte pour l'absence de circulation dudit courant.

Le système de mise en sécurité 20 comprend un verrou 60, mobile entre une position verrouillée et une position déverrouillée, le couplage du deuxième organe de connexion 42 avec le premier organe de connexion 26 étant figé en position verrouillée du verrou 60 et libre en position déverrouillée dudit verrou 60. Le verrou 60 est, par exemple, un verrou destiné à être associé à un relais pour être commandé en position verrouillée ou déverrouillée. En variante, le verrou est un verrou électromagnétique intégrant directement ledit relais.

Le système de mise en sécurité 20 comprend un premier organe de commande 62 adapté pour commander le premier dispositif de coupure 28 en position ouverte et le premier dispositif de mise à la terre 30 en position fermée.

Le système de mise en sécurité 20 comprend un deuxième organe de commande 64 adapté pour commander le deuxième dispositif de coupure 44 en position ouverte et le deuxième dispositif de mise à la terre 46 en position fermée.

Le système de mise en sécurité 20 comprend un troisième organe de commande 66, également appelé module de commande, adapté pour commander le verrou 60 en position verrouillée tant que le premier dispositif de mise à la terre 30 est en position ouverte. En complément facultatif, le troisième organe de commande 66 est adapté pour commander le verrou 60 en position verrouillée tant qu'au moins l'un des premier 30 et deuxième 46 dispositifs de mise à la terre est en position ouverte.

En complément facultatif, le système de mise en sécurité 20 comprend en outre un voyant lumineux 68 adapté pour émettre un signal lumineux de sécurité afin d'indiquer que le premier organe de connexion 26 est consigné. En complément facultatif, le voyant lumineux 68 est adapté pour émettre un signal lumineux de sécurité afin d'indiquer que les premier et deuxième organes de connexion 26, 42 sont consignés. Le troisième organe de commande 66 est alors, par exemple, adapté en outre pour commander l'émission du signal lumineux de sécurité lorsque le premier dispositif de mise à la terre 30 est en position fermée.

En complément facultatif, le système de mise en sécurité 20 comprend en outre un quatrième organe de commande 70 adapté pour commander le premier dispositif additionnel de coupure 38 en position ouverte lorsque le premier organe de commande 62 est activé pour commander le premier dispositif de coupure 28 en position ouverte et le premier dispositif de mise à la terre 30 en position fermée, mais que le premier dispositif de mise à la terre 30 reste en position ouverte.

Dans l'exemple de réalisation de la figure 1, le système de mise en sécurité 20 comprend un local 72 fermé par une trappe, non représentée. Au moins l'un des premier et deuxième organes de connexion 26, 42 est disposé à l'intérieur dudit local 72 fermé par la trappe, et le verrou 60 est configuré pour, dans sa position verrouillée, verrouiller la fermeture de la trappe, et dans sa position déverrouillée, libérer l'ouverture de la trappe. Les premier et deuxième organes de connexion 26, 42 sont disposés à l'intérieur du local 72 dans l'exemple de la figure 1.

En variante non représentée, le verrou 60 est configuré pour, dans sa position verrouillée, verrouiller directement le deuxième organe de connexion 42 au premier organe de connexion 26, et dans sa position déverrouillée, libérer les premier et deuxième organes de connexion 26, 42.

Chaque organe de connexion 26, 42 est, par exemple, un connecteur électrique connu en soi. Le premier organe de connexion 26 comporte une pluralité de premières broches 74, et le deuxième organe de connexion 42 comporte une pluralité de deuxièmes broches 76, les deuxièmes broches 76 étant complémentaires des premières broches 74 pour permettre la connexion du deuxième organe de connexion 42 avec le premier organe de connexion 26. L'homme du métier comprendra bien entendu que la répartition des broches 74, 76 est variable d'une application à l'autre, en fonction notamment du type d'équipement électrique 14, par exemple du type de navire.

Dans l'exemple de la figure 2, le premier organe de connexion 26 comporte huit premières broches 74, et le deuxième organe de connexion 42 comporte également huit deuxièmes broches 76, quatre broches 74, 76 correspondant aux premiers et deuxièmes conducteurs 22, 40 et quatre broches 74, 76 correspondant aux premier et deuxième organes de commande 62, 64.

Dans l'exemple de la figure 2 où l'alimentation est triphasée, les premiers conducteurs 22 comportent trois conducteurs de phase, et les deuxièmes conducteurs 40 comportent aussi trois conducteurs de phase.

Selon le premier mode de réalisation, le premier organe de connexion 26 est en forme d'une embase fixe, et le deuxième organe de connexion 42 est en forme d'une prise mobile, également appelée fiche mobile, disposée à l'extrémité d'un câble 78 venant du navire 6.

Le premier dispositif de coupure 28 est, par exemple, un disjoncteur sectionneur, tel qu'un disjoncteur sectionneur électromécanique. Le premier dispositif de mise à la terre 30 est, par exemple, un sectionneur, connu en soi.

Le premier dispositif additionnel de coupure 38 est, aussi à titre d'exemple, un disjoncteur, tel qu'un disjoncteur électromécanique.

De manière analogue, le deuxième dispositif de coupure 44 est, par exemple, un disjoncteur sectionneur, tel qu'un disjoncteur sectionneur électromécanique. Le deuxième dispositif de mise à la terre 46 est, par exemple, un sectionneur, connu en soi.

Le deuxième dispositif additionnel de coupure 56 est, aussi à titre d'exemple, un disjoncteur, tel qu'un disjoncteur électromécanique.

Le verrou 60 comporte, par exemple, un organe de verrouillage mécanique, non représenté, et un actionneur électromagnétique, non représenté, de commande de l'organe de verrouillage entre une première position correspondant à la position verrouillée et une seconde position correspondant à la position déverrouillée.

Au moins l'un des premier 62, deuxième 64, troisième 66 et quatrième 70 organes de commande est en forme d'une boucle de sécurité 80, 82, 84, 86, alimentée en tension et comportant au moins un interrupteur 88 et au moins un relais 90 connectés en série. En complément, certaines boucles de sécurité 80, 82 comportent leur propre source de tension 92, d'autres boucles de sécurité 84, 86 étant alimentées par une source de tension externe à ces boucles 84, 86. Chaque interrupteur 88 d'une boucle de sécurité 80, 82, 84, 86 correspondante est mobile entre une position ouverte et une position fermée et est adapté pour ouvrir la boucle de sécurité 80, 82, 84, 86 lorsqu'il est en position ouverte, chaque relais 90 étant adapté pour émettre un signal de commande en cas d'absence de tension dans la boucle de sécurité 80, 82, 84, 86.

Dans l'exemple de réalisation de la figure 2, chacun des premier 62, deuxième 64, troisième 66 et quatrième 70 organes de commande est en forme d'une boucle de sécurité 80, 82, 84, 86 correspondante. Plus précisément, le premier organe de commande 62 est en forme d'une première boucle de sécurité 80, le deuxième organe de commande 64 est en forme d'une deuxième boucle de sécurité 82 et le troisième organe de commande 66 est en forme d'une troisième boucle de sécurité 84. En complément facultatif, le quatrième organe de commande 70 est en forme d'une quatrième boucle de sécurité 86.

Le troisième organe de commande 66 est adapté en outre pour commander le verrou 60 en position déverrouillée lorsque les premier et deuxième dispositifs de mise à la terre 30, 46 sont en position fermée.

Le voyant lumineux 68 est par exemple configuré pour émettre un faisceau lumineux de couleur verte lorsque la mise en sécurité a été effectuée.

Dans l'exemple de la figure 2, chacune des première et deuxième boucles de sécurité 80, 82 forme une boucle entre le quai 8 et le navire 6. Chacune des première et deuxième boucles de sécurité 80, 82 comporte deux interrupteurs 88, un interrupteur 88 étant situé côté quai et l'autre interrupteur 88 étant situé côté navire.

Les interrupteurs 88 côté quai des première et deuxième boucles de sécurité 80, 82 sont en outre couplés entre eux, par exemple couplés mécaniquement, de sorte qu'un changement de position entre les positions ouverte et fermée d'un interrupteur 88 côté quai est apte à provoquer un même changement de position de l'autre interrupteur 88 côté quai. Autrement dit, les interrupteurs 88 côté quai des première et deuxième boucles de sécurité 80, 82 sont en permanence dans une même position.

De manière analogue, les interrupteurs 88 côté navire des première et deuxième boucles de sécurité 80, 82 sont également couplés entre eux par exemple couplés mécaniquement, de sorte que les interrupteurs 88 côté navire des première et deuxième boucles de sécurité 80, 82 sont en permanence dans une même position.

Les interrupteurs 88 des première et deuxième boucles de sécurité 80, 82 sont commandables manuellement, permettent de lancer la mise en sécurité des premier et deuxième organes de connexion électrique 26, 42 c'est-à-dire la consignation automatique des organes de connexion électrique 26, 42.

Au moins l'un du ou des relais 90, de préférence le relais 90 de la troisième boucle de sécurité 84, comporte un contact de recopie de la position du relais 90, et le système de mise en sécurité 20 comprend en outre des moyens, non représentés, de blocage du démarrage de l'appareil d'alimentation électrique 12 et/ou d'interdiction d'alimenter électriquement l'équipement électrique 14 en cas de détection d'une position incorrecte du relais correspondant 90. Les moyens de blocage correspondent, par exemple, à des moyens de commande, tels qu'un automate, adaptés pour commander l'ouverture de l'interrupteur 88 des première et deuxième boucles de sécurité 80, 82.

Au moins une boucle de sécurité 80, 82, 84, 86 comporte deux relais 90 pour avoir une redondance en cas de défaillance de l'un des relais 90. En variante, la redondance est obtenue via l'utilisation de relais de sécurité, ayant une redondance de contacts en interne. Les relais redondants 90 sont de préférence connectés en parallèle. Dans l'exemple de la figure 2, chaque boucle de sécurité 80, 82, 84, 86 comporte deux relais 90, même si pour des questions de clarté des dessins, seul l'un des deux relais 90 est représenté à chaque fois.

Le relais 90 de la première boucle de sécurité 80 est connecté à la fois au premier dispositif de coupure 28 et au premier dispositif de mise à la terre 30. Il est alors disposé côté quai 8. En variante, la première boucle de sécurité 80 comporte deux relais 90 en série, un relais 90 étant connecté au premier dispositif de coupure 28 et l'autre relais 90 étant connecté au premier dispositif de mise à la terre 30, ces relais 90 étant du côté du quai 8.

Le relais 90 de la deuxième boucle de sécurité 82 est connecté à la fois au deuxième dispositif de coupure 44 et au deuxième dispositif de mise à la terre 46. En variante, la deuxième boucle de sécurité 82 comporte deux relais 90 en série, un relais 90 étant connecté au deuxième dispositif de coupure 44 et l'autre relais 90 étant connecté au deuxième dispositif de mise à la terre 46.

Le relais 90 de la troisième boucle de sécurité 84 est connecté au verrou 60.

En complément facultatif, le relais 90 de la quatrième boucle de sécurité 86 est connecté au premier dispositif additionnel de coupure 38.

En variante ou en complément, au moins un relais 90 comporte une redondance de contacts. Cela permet également d'avoir une redondance en cas de défaillance de l'un des jeux de contacts.

Le fonctionnement de l'installation 10 selon l'invention, et notamment du système de mise en sécurité 20, va être à présent décrit.

Pour la connexion du navire 6 au réseau terrestre à quai, une fois le navire 6 à quai 8, un opérateur vérifie que l'appareil d'alimentation 12 à quai est disponible et opérationnel. Dans les conditions normales, la première boucle de sécurité 80 étant ouverte, le premier dispositif de coupure 28, et respectivement le premier dispositif de mise à la terre 30, sont maintenus en position ouverte, et respectivement en position fermée. Les conditions de consignation sont donc validées, ainsi la lumière verte du voyant lumineux 68 est allumée, et l'accès au premier organe de connexion 26 est possible (verrou 60 en position déverrouillée). De même, du côté de l'équipement 14, par exemple du côté navire, la deuxième boucle de sécurité 82 étant ouverte, le deuxième dispositif de coupure 44, et respectivement le deuxième dispositif de mise à la terre 46, sont maintenus en position ouverte, et respectivement en position fermée.

L'opérateur vérifie alors la disponibilité de l'appareil d'alimentation 12, ainsi que les conditions de sécurité soient remplies (lumière verte du voyant 68 et accès à la trappe correspondant au premier organe de connexion 26, c'est-à-dire verrou 60 en position déverrouillée, et premier organe de connexion 26 en bon état).

De manière analogue, l'opérateur à bord du navire vérifie que les conditions de sécurité sont remplies (consultation de la position fermée du deuxième dispositif de mise à la terre 46, deuxième organe de connexion 42 en bon état).

Le deuxième organe de connexion 42 est alors connecté au premier organe de connexion 26, puis le deuxième dispositif de mise à la terre 46 est commandé en position ouverte, la deuxième boucle de sécurité 82 étant fermée. L'opérateur à bord du navire demande alors le démarrage de l'appareil d'alimentation 12 se trouvant à quai.

La première boucle de sécurité 80 est alors fermée, puis le premier dispositif de mise à la terre 30 est commandé en position ouverte, et le premier dispositif de coupure 28 est commandé en position fermée.

Le deuxième dispositif de coupure 44 est alors commandé en position fermée, ainsi que le deuxième dispositif additionnel de coupure 56, lorsque les deux réseaux, côté quai et côté navire, sont synchronisés.

La charge électrique 54 est alors alimentée par le réseau terrestre, c'est-à-dire par la source d'alimentation 24, et ne nécessite plus d'être alimentée par des générateurs auxiliaires du navire qui sont alors déconnectés du réseau navire.

Le réseau bord du navire 6 est alors alimenté par le réseau terrestre via l'appareil d'alimentation 12, ce qui permet d'alimenter progressivement les différentes charges 54 à bord du navire 6, tout en arrêtant le fonctionnement des moteurs à combustion du navire 6. Cela permet alors de réduire la pollution de la mer et de l'air lorsque le navire 6 est à quai.

Pour la déconnexion du navire 6 par rapport au réseau terrestre à quai, lorsque le navire 6 souhaite quitter le quai 8, l'opérateur lance la mise en sécurité pour effectuer la consignation automatique des premier et deuxième organes de connexion 26, 42, en ouvrant l'un des deux interrupteurs 88 côté navire ou côté quai. L'ouverture d'un interrupteur 88 côté quai, à titre d'exemple, le fonctionnement étant similaire côté navire, entraîne l'ouverture de l'autre interrupteur 88 côté quai, de sorte que les première et deuxième boucles de sécurité 80, 82 sont alors ouvertes et ne présentent plus de tension aux bornes de leurs relais 90.

De manière analogue à ce qui a été décrit précédemment pour l'opération de connexion, les relais 90 des première et deuxième boucles de sécurité 80, 82 détectent l'absence de tension à leurs bornes et envoient alors des signaux de commande pour commander le premier dispositif de coupure 28 en position ouverte et le premier dispositif de mise à la terre 30 en position fermée, et respectivement le deuxième dispositif de coupure 44 en position ouverte et le deuxième dispositif de mise à la terre 46 en position fermée.

Après fermeture du premier dispositif de mise à la terre 30, l'interrupteur 88 de la troisième boucle de sécurité 84 est commandé en position fermée, et le relais 90 de cette troisième boucle 84 commande le verrou en position déverrouillée, de sorte qu'il est alors possible pour l'opérateur de déconnecter le deuxième organe de connexion 42 du premier organe de connexion 26.

En outre, si le verrou 60 se trouve être défaillant, le système 20 détecte automatiquement la discordance entre l'état du verrou 60 de par la position mécanique de son organe de verrouillage et l'état du relais 90 de la troisième boucle de sécurité 84.

L'ensemble des dispositifs de coupure 28, 44, dispositifs de mise à la terre 30, 46 et relais 90 intervenant dans le système de mise en sécurité 20 est surveillé. Lorsqu'une incohérence est détectée, une alarme est générée et l'appareil d'alimentation 12 à quai n'est alors pas apte à être démarrée.

En outre, lorsque le système de mise en sécurité 20 comporte le quatrième organe de commande 70 selon le complément facultatif précité, le quatrième organe de commande 70 permet de commander le premier dispositif additionnel de coupure 38 en position ouverte lorsque le premier dispositif de mise à la terre 30 est à nouveau en position ouverte après le passage du verrou 60 de sa position verrouillée vers sa position déverrouillée, ce qui est anormal. Le quatrième organe de commande 70 permet alors de couper l'alimentation par la source 24 de l'appareil d'alimentation 12 ce qui permet d'éviter une présence de tension sur les premiers conducteurs 22 lorsque le verrou 60 est anormalement déverrouillé. Ceci permet d'améliorer encore la sécurité des personnes.

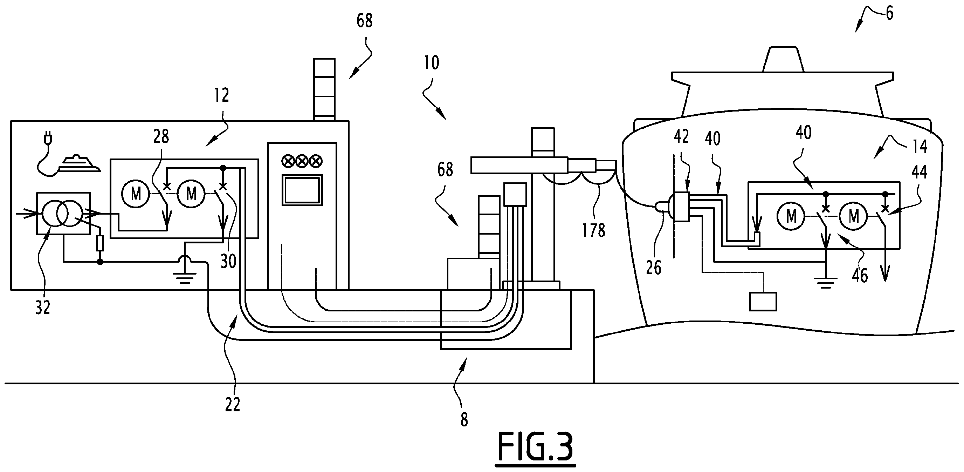

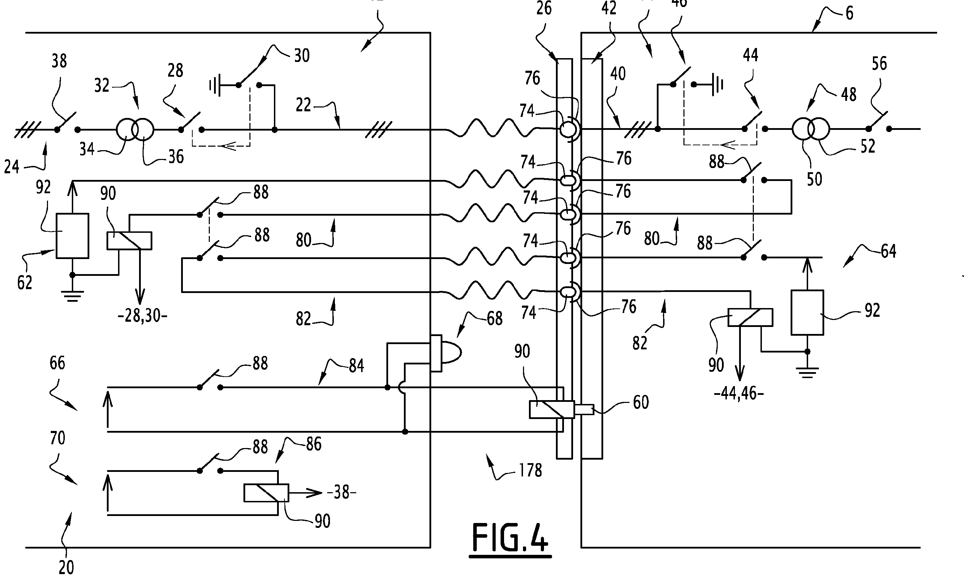

Les figures 3 et 4 illustrent un deuxième mode de réalisation de l'invention pour lequel les éléments identiques au premier mode de réalisation, décrit précédemment, sont repérés par des références identiques, et ne sont pas décrits à nouveau.

Selon le deuxième mode de réalisation, le premier organe de connexion 26 est en forme d'une prise mobile, également appelée fiche mobile, disposée à l'extrémité d'un câble 178 allant du quai 8 vers le navire 6, et le deuxième organe de connexion 42 est en forme d'une embase fixe, solidaire du navire 6.

Selon ce deuxième mode de réalisation, dans l'exemple de la figure 4, les premières broches 74 sont des broches maies et les deuxièmes broches 76 sont des broches femelles.

Selon ce deuxième mode de réalisation, le verrou 60 est disposé du côté du navire 6, et dans l'exemple de la figure 4, la troisième boucle de sécurité 84 forme une boucle entre le quai 8 et le navire 6, chacune des première et deuxième boucles de sécurité 80, 82 formant également une boucle entre le quai 8 et le navire 6. Le verrou 60 est, par exemple, disposé du côté du premier organe de connexion 26, formant la fiche mobile venant du quai. En variante, le verrou 60 est disposé du côté du deuxième organe de connexion 42, formant l'embase fixe, et est autrement dit installé du côté du navire.

Le fonctionnement de ce deuxième mode de réalisation est identique à celui du premier mode de réalisation, décrit précédemment, et n'est pas décrit à nouveau.

Les avantages de ce deuxième mode de réalisation sont identiques à ceux du premier mode de réalisation, décrits précédemment, et ne sont pas décrits à nouveau.

On conçoit ainsi que le système de mise en sécurité 20 selon l'invention permet de réduire le temps nécessaire à la consignation lors de la connexion ou de la déconnexion du deuxième organe de connexion 42 par rapport au premier organe de connexion 26.

## Revendications

1. Système de mise en sécurité (20) pour le raccordement électrique d'un équipement électrique (14) à un appareil d'alimentation électrique (12),
l'appareil d'alimentation (12) comprenant des premiers conducteurs électriques (22) destinés à être reliés à une source d'alimentation (24), telle qu'un réseau électrique, un premier organe de connexion électrique (26), un premier dispositif de coupure (28) et un premier dispositif de mise à la terre (30), le premier organe de connexion (26) étant relié aux premiers conducteurs (22), le premier dispositif de coupure (28) étant mobile entre une position fermée de circulation d'un premier courant dans les premiers conducteurs (22) et une position ouverte d'absence de circulation dudit premier courant, et le premier dispositif de mise à la terre (30) étant mobile entre une position fermée de mise à la terre des premiers conducteurs (22) et une position ouverte d'absence de mise à la terre,
l'équipement électrique (14) comprenant des deuxièmes conducteurs électriques (40) et un deuxième organe de connexion électrique (42), le deuxième organe de connexion (42) étant apte à être couplé au premier organe de connexion (26) pour relier électriquement les deuxièmes conducteurs (40) aux premiers conducteurs (22),
le système de mise en sécurité (20) comprenant :
- un verrou (60), mobile entre une position verrouillée et une position déverrouillée, le couplage du deuxième organe de connexion (42) avec le premier organe de connexion (26) étant figé en position verrouillée du verrou (60) et libre en position déverrouillée dudit verrou (60),
- un premier organe de commande (62) adapté pour commander le premier dispositif de coupure (28) en position ouverte et le premier dispositif de mise à la terre (30) en position fermée pendant la phase de déconnexion avant la déconnexion du deuxième organe de connexion (42) du premier organe de connexion (26), et pour commander le premier dispositif de coupure (28) en position fermée et le premier dispositif de mise à la terre (30) en position ouverte pendant la phase de connexion après la connexion du deuxième organe de connexion (42) au premier organe de connexion (26), le système de mise en sécurité (20) étant **caractérisé en ce qu'**il comprend :
- un module de commande (66) adapté pour commander le verrou (60) en position verrouillée tant que le premier dispositif de mise à la terre (30) est en position ouverte, le module de commande (66) étant adapté en outre pour commander le verrou (60) en position déverrouillée lorsque le premier dispositif de mise à la terre (30) est en position fermée.

2. Système (20) selon la revendication 1, dans lequel l'équipement électrique (14) comprend en outre un deuxième dispositif de coupure (44) et un deuxième dispositif de mise à la terre (46), le deuxième organe de connexion (42) étant relié aux deuxièmes conducteurs (40), le deuxième dispositif de coupure (44) étant mobile entre une position fermée de circulation d'un deuxième courant dans les deuxièmes conducteurs (40) et une position ouverte d'absence de circulation dudit deuxième courant, et le deuxième dispositif de mise à la terre (46) étant mobile entre une position fermée de mise à la terre des deuxièmes conducteurs (40) et une position ouverte d'absence de mise à la terre, et
dans lequel le système de mise en sécurité (20) comprend en outre
- un deuxième organe de commande (64) adapté pour commander le deuxième dispositif de coupure (44) en position ouverte et le deuxième dispositif de mise à la terre (46) en position fermée, et
le module de commande (66) est adapté pour commander le verrou (60) en position verrouillée tant qu'au moins l'un des premier et deuxième dispositifs de mise à la terre (30, 46) est en position ouverte.

3. Système (20) selon la revendication 1 ou 2, dans lequel le module de commande (66) est adapté en outre pour commander le verrou (60) en position déverrouillée lorsque les premier et deuxième dispositifs de mise à la terre (30, 46) sont en position fermée.

4. Système (20) selon l'une quelconque des revendications précédentes, dans lequel au moins l'un des premier et deuxième organes de connexion (26, 42) est disposé à l'intérieur d'un local (72) fermé par une trappe, et le verrou (60) est configuré pour, dans sa position verrouillée, verrouiller la fermeture de la trappe, et dans sa position déverrouillée, libérer l'ouverture de la trappe.

5. Système (20) selon l'une quelconque des revendications 1 à 3, dans lequel le verrou (60) est configuré pour, dans sa position verrouillée, verrouiller directement le deuxième organe de connexion (42) au premier organe de connexion (26), et dans sa position déverrouillée, libérer les premier et deuxième organes de connexion (26, 42).

6. Système (20) selon l'une quelconque des revendications précédentes, dans lequel l'appareil d'alimentation (12) comprend en outre un transformateur électrique (32) comportant un enroulement primaire (34) et un enroulement secondaire (36), et un dispositif additionnel de coupure (38) relié à l'enroulement primaire (34), le dispositif additionnel de coupure (38) étant mobile entre une position fermée pour la circulation d'un courant à travers l'enroulement primaire (32) et une position ouverte pour l'absence de circulation dudit courant, les premiers conducteurs (22) et le premier dispositif de coupure (28) étant reliés à l'enroulement secondaire (36), et
dans lequel le système de mise en sécurité (20) comprend en outre un autre organe de commande (70) adapté pour commander le dispositif additionnel de coupure (38) en position ouverte lorsque le premier organe de commande (62) est activé pour commander le premier dispositif de coupure (28) en position ouverte et le premier dispositif de mise à la terre (30) en position fermée, et que le premier dispositif de mise à la terre (30) reste en position ouverte.

7. Système (20) selon l'une quelconque des revendications précédentes, dans lequel le système de mise en sécurité (20) comprend en outre un voyant lumineux (68) adapté pour émettre un signal lumineux de sécurité afin d'indiquer que les premier et deuxième organes de connexion (26, 42) sont consignés,
le module de commande (66) étant adapté en outre pour commander l'émission du signal lumineux de sécurité lorsque le premier dispositif de mise à la terre (30) est en position fermée.

8. Système (20) selon l'une quelconque des revendications précédentes, dans lequel au moins l'un des organes de commande (60, 62, 70) et du module de commande (66) est en forme d'une boucle de sécurité (80, 82, 84, 86), alimentée en tension et comportant au moins un interrupteur (88) et au moins un relais (90) connectés en série, chaque interrupteur (88) étant mobile entre une position ouverte et une position fermée et étant adapté pour ouvrir la boucle de sécurité (80, 82, 84, 86) lorsqu'il est en position ouverte, chaque relais (90) étant adapté pour émettre un signal de commande en cas d'absence de tension dans la boucle de sécurité (80, 82, 84, 86).

9. Système (20) selon la revendication 8, dans lequel chacun des organes de commande (60, 62, 70) et du module de commande (66) est en forme d'une boucle de sécurité (80, 82, 84, 86) correspondante.

10. Système (20) selon la revendication 8 ou 9, dans lequel au moins l'un du ou des relais (90), de préférence le relais de la boucle de sécurité (86) du module de commande (66), comporte un contact de recopie de la position du relais (90), et le système comprend en outre des moyens de blocage du démarrage de l'appareil d'alimentation électrique (12) et/ou d'interdiction d'alimenter électriquement l'équipement électrique (14) en cas de détection d'une position incorrecte du relais (90).

11. Système (20) selon l'une quelconque des revendications 8 à 10, dans lequel au moins une boucle de sécurité (80, 82, 84, 86) comporte deux relais (90).

12. Système (20) selon l'une quelconque des revendications 8 à 11, dans lequel au moins un relais (90) comporte une redondance de contacts.

13. Installation électrique (10) comprenant un appareil (12) d'alimentation d'un équipement électrique (14) et un système de mise en sécurité (20) pour le raccordement électrique de l'équipement électrique (14) à l'appareil d'alimentation (12),
l'appareil d'alimentation (12) comprenant des premiers conducteurs électriques (22) destinés à être reliés à une source d'alimentation (24), un premier organe de connexion électrique (26), un premier dispositif de coupure (28) et un premier dispositif de mise à la terre (30), le premier organe de connexion (26) étant relié aux premiers conducteurs (22), le premier dispositif de coupure (28) étant mobile entre une position fermée de circulation d'un premier courant dans les premiers conducteurs (22) et une position ouverte d'absence de circulation dudit premier courant, et le premier dispositif de mise à la terre (30) étant mobile entre une position fermée de mise à la terre des premiers conducteurs (22) et une position ouverte d'absence de mise à la terre,
**caractérisée en ce que** le système de mise en sécurité (20) est selon l'une quelconque des revendications précédentes.

## Patentansprüche

1. Sicherungssystem (20) für den elektrischen Anschluss eines Elektrogerätes (14) an einem Stromversorgungsgerät (12),
wobei das Stromversorgungsgerät (12) erste elektrische Leiter (22) zum Anschluss an einer Stromversorgung (24), wie beispielsweise einem Stromversorgungsnetz, ein erstes elektrisches Verbindungselement (26), eine erste Trennvorrichtung (28) und eine erste Erdungsvorrichtung (30) aufweist, wobei das erste Verbindungselement (26) mit den ersten Leitern (22) verbunden ist, die erste Trennvorrichtung (28) bewegbar ist zwischen einer Geschlossen-Position bei der ein erster Strom in den ersten Leitern (22) fließt, und einer Offen-Position, bei der der erste Strom nicht fließt, und die erste Erdungsvorrichtung (30) bewegbar zwischen einer Geschlossen-Position zur Erdung der ersten Leiter (22) und einer Offen-Position zur Nicht-Erdung ist,
wobei das Elektrogerät (14) zweite elektrische Leiter (40) und ein zweites elektrisches Verbindungselement (42) aufweist, wobei das zweite Verbindungselement (42) dazu geeignet ist, mit dem ersten Verbindungselement (26) verbunden zu werden, um die zweiten Leiter (40) mit den ersten Leitern (22) elektrisch zu verbinden,
wobei das Sicherungssystem (20) aufweist:
- eine Verriegelung (60), die bewegbar zwischen einer Verriegelt-Position und einer Entriegelt-Position ist, wobei die Verbindung des zweiten Verbindungselements (42) mit dem ersten Verbindungselement (26) in der Verriegelt-Position der Verriegelung (60) fest und in der Entriegelt-Position der Verriegelung (60) frei ist,
- ein erstes Steuerungselement (62), das eingerichtet ist zur Steuerung der ersten Trennvorrichtung (28) in die Offen-Position und der ersten Erdungsvorrichtung (30) in die Geschlossen-Position während der Trennungsphase vor der Trennung des zweiten Verbindungselements (42) vom ersten Verbindungselement (26) und zur Steuerung der ersten Trennvorrichtung (28) in die Geschlossen-Position und der ersten Erdungsvorrichtung (30) in die Offen-Position während der Verbindungsphase nach der Verbindung des zweiten Verbindungselements (42) mit dem ersten Verbindungselement (26),
wobei das Sicherungssystem (20) **dadurch gekennzeichnet ist, dass** es aufweist:
- ein Steuerungsmodul (66), das eingerichtet ist zur Steuerung der Verriegelung (60) in die Verriegelt-Position, solange die erste Erdungsvorrichtung (30) in der Offen-Position ist,
wobei das Steuerungsmodul (66) ferner eingerichtet ist zur Steuerung der Verriegelung (60) in die Entriegelt-Position, wenn die erste Erdungsvorrichtung (30) in der Geschlossen-Position ist.

2. System (20) gemäß Anspruch 1, in dem ferner das Elektrogerät (14) eine zweite Trennvorrichtung (44) und eine zweite Erdungsvorrichtung (46) aufweist, wobei das zweite Verbindungselement (42) mit den zweiten Leitern (40) verbunden ist, die zweite Trennvorrichtung (44) bewegbar ist zwischen einer Geschlossen-Position, bei der ein zweiter Strom in den zweiten Leitern (40) fließt, und einer Offen-Position, bei der der zweite Strom nicht fließt, und wobei die zweite Erdungsvorrichtung (46) bewegbar zwischen einer Geschlossen-Position zur Erdung der zweiten Leiter (40) und einer Offen-Position zur Nicht-Erdung ist,
und in dem das Sicherungssystem (20) ferner aufweist
- ein zweites Steuerungselement (64), das eingerichtet ist zur Steuerung der zweiten Trennvorrichtung (44) in die Offen-Position und der zweiten Erdungsvorrichtung (46) in die Geschlossen-Position, und
das Steuerungsmodul (66), das eingerichtet ist zur Steuerung der Verriegelung (60) in die Entriegelt-Position, solange mindestens eine der ersten und zweiten Erdungsvorrichtungen (30, 46) in der Offen-Position ist.

3. System (20) gemäß Anspruch 1 oder 2, in dem ferner das Steuerungsmodul (66) eingerichtet ist zur Steuerung der Verriegelung (60) in die Entriegelt-Position, wenn die erste und die zweite Erdungsvorrichtung (30, 46) in der Geschlossen-Position sind.

4. System (20) gemäß einem der vorherigen Ansprüchen, in dem mindestens einer der ersten und zweiten Verbindungselemente (26, 42) in einem durch eine Klappe verschlossenen Raum (72) angeordnet ist, wobei die Verriegelung (60) derart gestaltet ist, um in seiner Verriegelt-Position den Verschluss der Klappe zu verriegeln, und in seiner Entriegelt-Position das Öffnen der Klappe frei zu geben.

5. System (20) gemäß einem der Ansprüche 1 bis 3, wobei die Verriegelung (60) gestaltet ist, um in ihrer Verriegelt-Position das zweite Verbindungselement (42) direkt mit dem ersten Verbindungselement (26) zu verriegeln, und in ihrer Entriegelt-Position das erste und das zweite Verbindungselement (26, 42) frei zu geben.

6. System (20) gemäß einem der vorherigen Ansprüchen, in dem das Stromversorgungsgerät (12) ferner einen elektrischen Transformator (32) mit einer Primärwicklung (34) und einer Sekundärwicklung (36), und eine zusätzliche Trennvorrichtung (38), die mit der Primärwicklung (34) verbunden ist, aufweist, wobei die zusätzliche Trennvorrichtung (38) bewegbar ist zwischen einer Verriegelt-Position für das Fließen eines Stroms durch die Primärwicklung (32), und einer Offen-Position für das Nicht-Fließen des Stroms, wobei die ersten Leiter (22) und die erste Trennvorrichtung (28) mit der Sekundärwicklung (36) verbunden sind, und
wobei das Sicherungssystem (20) ferner ein anderes Steuerungselement (70) aufweist, das eingerichtet ist zur Steuerung der zusätzlichen Trennvorrichtung (38) in die Offen-Position, wenn das erste Steuerungselement (62) aktiviert ist, um die erste Trennvorrichtung (28) in die Offen-Position und die erste Erdungsvorrichtung (30) in die Geschlossen-Position zu steuern, und die erste Erdungsvorrichtung (30) in der Offen-Position bleibt.

7. System (20) gemäß einem der vorherigen Ansprüche, in dem das Sicherungssystem (20) ferner eine Leuchtanzeige (68) aufweist, die eingerichtet ist, ein Sicherheitsleuchtsignal auszugeben, um anzuzeigen, dass das erste und das zweite Verbindungselement (26, 42) sicher getrennt sind,
wobei das Steuerungsmodul (66) ferner eingerichtet ist zur Steuerung der Ausgabe des Sicherheitsleuchtsignals, wenn die erste Erdungsvorrichtung (30) in der Geschlossen-Position ist.

8. System (20) gemäß einem der vorherigen Ansprüche, in dem mindestens eines von den Steuerungselementen (60, 62, 70) und dem Steuerungsmodul (66) in Form einer Sicherheitsschleife (80, 82, 84, 86) ist, welche mit Spannung versorgt wird und mindestens einen Schalter (88) und mindestens ein in Reihe geschaltetes Relais (90) aufweist, wobei jeder Schalter (88) bewegbar zwischen einer Offen-Position und einer Geschlossen-Position ist und eingerichtet ist zum Öffnen der Sicherheitsschleife (80, 82, 84, 86), wenn er in einer Offen-Position ist, wobei jedes Relais (90) eingerichtet ist zur Ausgabe eines Steuerungssignals bei Fehlen einer Spannung in der Sicherheitsschleife (80, 82, 84, 86).

9. System (20) gemäß Anspruch 8, in dem jedes von den Steuerungselementen (60, 62, 70) und dem Steuerungsmodul (66) in der Form einer entsprechenden Sicherheitsschleife (80, 82, 84, 86) ist.

10. System (20) gemäß Anspruch 8 oder 9, in dem mindestens eines der Relais (90), vorzugsweise das Relais der Sicherheitsschleife (86) des Steuerungsmoduls (66), einen Kontakt zum Übernehmen der Position des Relais (90) enthält, und das System ferner Mittel zum Blockieren des Starts des Stromversorgungsgeräts (12) und/oder zum Verhindern der Stromversorgung des Elektrogerätes (14), falls eine inkorrekte Position des Relais (90) erkannt wird.

11. System (20) gemäß einem der Ansprüche 8 bis 10, in dem mindestens eine der Sicherheitsschleifen (80, 82, 84, 86) zwei Relais (90) enthält.

12. System (20) gemäß einem der Ansprüche 8 bis 11, in dem mindestens ein Relais (90) eine Redundanz von Kontakten enthält.

13. Elektrische Anlage (10) aufweisend ein Stromversorgungsgerät (12) eines Elektrogerätes (14) und ein Sicherungssystem (20) für die elektrische Verbindung des Elektrogerätes (14) mit dem Stromversorgungsgerät (12),
wobei das Stromversorgungsgerät (12) erste elektrische Leiter (22) zum Anschluss an einer Stromversorgung (24), ein erstes elektrisches Verbindungselement (26), eine erste Trennvorrichtung (28) und eine erste Erdungsvorrichtung (30) aufweist, wobei das erste Verbindungselement (26) mit den ersten Leitern (22) verbunden ist, die erste Trennvorrichtung (28) bewegbar ist zwischen einer Geschlossen-Position bei der ein erster Strom in den ersten Leitern (22) fließt, und einer Offen-Position, bei der besagter erster Strom nicht fließt, und die erste Erdungsvorrichtung (30) bewegbar zwischen einer Geschlossen-Position bei Erdung der ersten Leiter (22) und einer Offen-Position bei Abwesenheit der Erdung ist,
**dadurch gekennzeichnet, dass** das Sicherungssystem (20) gemäß einem der vorherigen Ansprüche ist.

## Claims

1. Safety system (20) for the electrical connection of an electrical equipment (14) to an electric power supply apparatus (12),
the power supply apparatus (12) comprising first electrical conductors (22) which are to be connected to a power source (24), such as an electricity network, a first electrical connection member (26), a first cut-off device (28) and a first grounding device (30), the first connection member (26) being connected to the first conductors (22), the first cut-off device (28) being movable between a closed position in which a first current flows in the first conductors (22) and an open position in which the flow of said first current is absent, and the first grounding device (30) being movable between a closed position for grounding the first conductors (22) and an open position in which said grounding is absent,
the electrical equipment (14) comprising second electrical conductors (40) and a second electrical connection member (42), the second connection member (42) being adapted to be coupled to the first connection member (26) to electrically connect the second conductors (40) to the first conductors (22),
the safety system (20) comprising:
- a lock (60), movable between a locked position and an unlocked position, the coupling of the second connection member (42) with the first connection member (26) being fixed in the locked position of the lock (60) and free in the unlocked position of said lock (60),
- a first control member (62) adapted to control the first cut-off device (28) into the open position and the first grounding device (30) into the closed position during the disconnection phase prior to disconnection of the second connection member (42) from the first connection member (26), and to control the first cut-off device (28) into the closed position and the first grounding device (30) into the open position during the connection phase after connection of the second connection member (42) to the first connection member (26),
the safety system (20) being **characterized in that** it comprises:
- a control module (66) adapted to control the lock (60) into the locked position as long as the first grounding device (30) is in the open position, the control module (66) further being adapted to control the lock (60) into the unlocked position when the first grounding device (30) is in the closed position.

2. System (20) according to claim 1, wherein the electrical equipment (14) further comprises a second cut-off device (44) and a second grounding device (46), the second connection member (42) being connected to the second conductors (40), the second cut-off device (44) being movable between a closed position in which a second current flows in the second conductors (40) and an open position in which the flow of said second current is absent, and the second grounding device (46) being movable between a closed position for grounding the second conductors (40) and an open position in which said grounding is absent, and
wherein the safety system (20) further comprises
- a second control member (64) adapted to control the second cut-off device (44) into the open position and the second grounding device (46) into the closed position, and
the control module (66) is adapted to control the lock (60) into the locked position as long as at least one of the first and second grounding devices (30, 46) is in the open position.

3. System (20) according to claim 1 or 2, wherein the control module (66) is further adapted to control the lock (60) into the unlocked position when the first and second grounding devices (30, 46) are in the closed position.

4. System (20) according to any one of the preceding claims, wherein at least one of the first and second connection members (26, 42) is arranged inside a room (72) closed by a trap door, and the lock (60) is configured to, in its locked position, lock the closure of the trap door and, in its unlocked position, free the opening of the trap door.

5. System (20) according to any one of claims 1 to 3, wherein the lock (60) is configured to, in its locked position, directly lock the second connection member (42) to the first connection member (26) and, in its unlocked position, free the first and second connection members (26, 42).

6. System (20) according to any one of the preceding claims, wherein the power supply apparatus (12) further comprises an electrical transformer (32) having a primary winding (34) and a secondary winding (36), and an additional cut-off device (38) connected to the primary winding (34), the additional cut-off device (38) being movable between a closed position in which a current flows through the primary winding (32) and an open position in which the flow of said current is absent, the first conductors (22) and the first cut-off device (28) being connected to the secondary winding (36), and
wherein the safety system (20) further comprises another control member (70) adapted to control the additional cut-off device (38) into the open position when the first control member (62) is activated to control the first cut-off device (28) into the open position and the first grounding device (30) into the closed position, and the first grounding device (30) remains in the open position.

7. System (20) according to any one of the preceding claims, wherein the safety system (20) further comprises an indicator light (68) adapted to emit a safety light signal to indicate that the first and second connection members (26, 42) are locked out,
the control module (66) further being adapted to control the emission of the safety light signal when the first grounding device (30) is in the closed position.

8. System (20) according to any one of the preceding claims, wherein at least one of the control members (60, 62, 70) and of the control module (66) is in the form of a safety loop (80, 82, 84, 86), supplied with voltage and including at least one switch (88) and at least one relay (90) connected in series, each switch (88) being movable between an open position and a closed position and being adapted to open the safety loop (80, 82, 84, 86) when it is in the open position, each relay (90) being adapted to emit a control signal in the event of absence of voltage in the safety loop (80, 82, 84, 86).

9. System (20) according to claim 8, wherein each of the control members (60, 62, 70) and the control module (66) is in the form of a corresponding safety loop (80, 82, 84, 86).

10. System (20) according to claim 8 or 9, wherein at least one of the relay(s) (90), preferably the relay of the safety loop (86) of the control module (66), has a contact which mirrors the position of the relay (90), and the system further comprises means for blocking the start-up of the electric power supply apparatus (12) and/or for prohibiting the supply of power to the electrical equipment (14) in the event of detection of an incorrect position of the relay (90).

11. System (20) according to any one of claims 8 to 10, wherein at least one safety loop (80, 82, 84, 86) has two relays (90).

12. System (20) according to any one of claims 8 to 11, wherein at least one relay (90) has redundancy of contacts.

13. Electrical installation (10) comprising a power supply apparatus (12) for supplying power to an electrical equipment (14), and a safety system (20) for the electrical connection of the electrical equipment (14) to the power supply apparatus (12),
the power supply apparatus (12) comprising first electrical conductors (22) which are to be connected to a power source (24), a first electrical connection member (26), a first cut-off device (28) and a first grounding device (30), the first connection member (26) being connected to the first conductors (22), the first cut-off device (28) being movable between a closed position in which a first current flows in the first conductors (22) and an open position in which the flow of said first current is absent, and the first grounding device (30) being movable between a closed position for grounding the first conductors (22) and an open position in which said grounding is absent,
**characterized in that** the safety system (20) is in accordance with any one of the preceding claims.
